# EUROPÄISCHE PATENTSCHRIFT

(11) **EP 0 816 748 B1**
(45) Veröffentlichungstag und Bekanntmachung des Hinweises auf die Patenterteilung: **29.03.2006**
(21) Anmeldenummer: 97110347.8
(22) Anmeldetag: 25.06.1997
(51) Int. Cl.: F21V 14/00

(54) **Scheinwerfer für Fahrzeuge**
Vehicle headlamp
Projecteur pour véhicule

(30) Priorität: 28.06.1996 DE 19625923
(43) Veröffentlichungstag der Anmeldung: 07.01.1998
(73) Patentinhaber: Hella KGaA Hueck & Co., 59552 Lippstadt (DE)
(72) Erfinder: Kalze, Franz-Josef, 33428 Harsewinkel (DE); Rixen, Heinz Werner, Dr., 59556 Lippstadt (DE)

(56) Entgegenhaltungen:
- DE-A- 3 729 515
- DE-A- 4 306 316
- DE-A- 4 335 286
- GB-A- 496 749
- US-A- 5 138 540

## Beschreibung

Die Erfindung betrifft einen Scheinwerfer nach dem Oberbegriff des Patentanspruchs 1.

Die Erfindung betrifft weiterhin ein Verfahren zur Einstellung eines Scheinwerfers für Fahrzeuge nach dem Oberbegriff des Patentanspruchs 10.

Aus der DE 37 29 515 A1 ist ein Scheinwerfer für Fahrzeuge bekannt, der einen Reflektor mit einer sich in horizontaler Richtung erstreckenden optischen Achse, einem ersten Brennpunkt und einem zweiten Brennpunkt, der vom Reflektor weiter als der erste Brennpunkt entfernt liegt, aufweist. Bei dem ersten Brennpunkt des Reflektors ist eine Lichtquelle angeordnet, wobei der Reflektor so ausgebildet ist, dass er in der Lage ist, Lichtstrahlen in der Lichtquelle so zu reflektieren, dass diese bei seinem zweiten Brennpunkt konvergieren. Dem zweiten Brennpunkt des Reflektors benachbart ist ein Abdeckschirm bzw. eine Blende angeordnet. Auf der zum Reflektor abgewandten Seite der Blende ist eine fokussierende Linse angeordnet, die einen Brennpunkt in der Nähe des zweiten Brennpunktes des Reflektors aufweist. Die Linse ist in vertikaler Richtung zwischen einer Abblendlicht-Position und einer Fernlicht-Position bewegbar ausgestaltet.

Beim Einbau derartiger Scheinwerfer in Fahrzeuge ist eine genaue Einstellung der Scheinwerfer notwendig, um beispielsweise eine Blendung des entgegenkommenden Verkehrs zu verhindern. Um eine vorgeschriebene Einstellung des projizierten Lichtstromes zu erreichen, muss der Lichtstrom um bestimmte Einstellwege in vertikaler und horizontaler Richtung verschiebbar sein. Das heißt, die Lichtstromverteilung muss durch eine Einstellung von vertikalen und horizontalen Einstellwinkeln bezüglich der Scheinwerferlängsachse bzw. bezüglich einer mit der Scheinwerferlängsachse korrespondierenden Fahrzeuglängsachse einstellbar sein. Insbesondere müssen die einzelnen Systemkomponenten des Scheinwerfers so aufeinander abgestimmt werden, dass die gewünschten Einstellwinkel des Lichtstromes sowohl bei Abblendlicht als auch bei Fernlicht erreicht werden. Dies bedingt eine hohe Präzision bzw. aufwendige Justierung der einzelnen Systemkomponenten des Scheinwerfers untereinander.

Aus der GB 496 749 A ist ein Scheinwerfer bekannt, der nach dem Reflexionsprinzip funktioniert und eine Rotation einer Lichtscheibe um die Scheinwerferlängsachse vorsieht.

Aufgabe der vorliegenden Erfindung ist es, den Scheinwerfer so zu verbessern, dass er kostengünstig hergestellt werden kann und dass die Einstellungsmöglichkeit des Lichtstromes erweitert wird.

Zur Lösung dieser Aufgabe weist die Erfindung die Merkmale des Patentanspruchs 1 auf.

Nach der Erfindung ist die Linse exzentrisch zur Scheinwerferlängsachse gelagert und im wesentlichen um die Scheinwerferlängsachse drehbar angeordnet ist. Es wird auf einfache Weise erreicht, dass die einzelnen Systemkomponenten - mit Ausnahme der Linse - konstruktiv einander fest zugeordnet werden können, wobei eine Ausrichtung der Einzelsysteme, z. B. für Abblendlicht und Fernlicht erhalten bleibt. Das Reflektorsystem für Abblend- und Fernlicht kann beispielsweise als einteiliges Spritzteil hergestellt werden. Das Reflektorsystem kann fest eingebaut werden, da auf eine separate Einstellmöglichkeit verzichtet werden kann.

Nach einer bevorzugten Ausgestaltung kann die Linse in vertikaler Richtung in Abhängigkeit vom Ladezustand des Fahrzeuges bzw. in der Abhängigkeit von der Fahrzeugneigung quer zur Fahrzeuglängsachse verschoben werden, so dass eine Niveauregulierung erreicht wird.

Gemäß einer weiteren bevorzugten Ausführungsform ist die Linse in horizontaler Richtung in Abhängigkeit von der Lenkradstellung des Fahrzeuges bzw. seiner Vorderräder verschiebbar, so dass auf einfache Weise eine Kurvensteuerung des Lichtstromes erreicht wird.

Weiterhin wird nach einer bevorzugten Ausgestaltung zwischen Abblendlicht und Fernlicht durch eine vertikale Verschiebung der Linse von einer Abblendlicht- in eine Fernlicht-Position umgeschaltet.

Nach einer bevorzugten Ausführungsform ist die Linse exzentrisch zur Scheinwerferlängsachse in einer ersten Halterung rotierbar um die Scheinwerferlängsachse angeordnet. Durch Rotation der Linse erfolgt somit eine definierte Verschiebung in horizontaler und vertikaler Richtung. Die Rotation kann von Hand über Stellschrauben oder auch über einen Stellmotor durchgeführt werden. Zusätzlich ist die erste Halterung mit einer zweiten Halterung verbunden und über Stellmotoren in vertikaler und horizontaler Richtung verschiebbar. Dadurch sind einer Justierung in horizontaler und vertikaler Richtung durch Rotation weitere dynamische Verschiebungen in horizontaler und vertikaler Richtung überlagerbar.

Weitere Aufgabe der Erfindung ist es, ein Verfahren zur Einstellung eines Scheinwerfers mit nachgeschalteter bewegbarer Linse zu verbessern und universeller zu gestalten.

Zur Lösung dieser Aufgabe weist die Erfindung die Merkmale des Patentanspruchs 10 auf.

Ein solches Verfahren hat den Vorteil, dass auch bei Verwendung fester Systemkomponenten des Scheinwerfers, die zum Beispiel als einteilige Spritzlinge hergestellt wurden, eine Ausrichtung der Einzelsysteme möglich bleibt. Eine Einstellung der Lichtstromverteilung ist beispielsweise durch Stellschrauben von Hand möglich.

Nach einer bevorzugten Ausführungsform erfolgt die Verschiebung der Linse in vertikaler und horizontaler Richtung über Stellmotoren. Durch die Verwendung von Stellmotoren ist grundsätzlich auch eine programmierte Verschiebung der Linse und damit eine programmierte Steuerung des Lichtstromes möglich.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

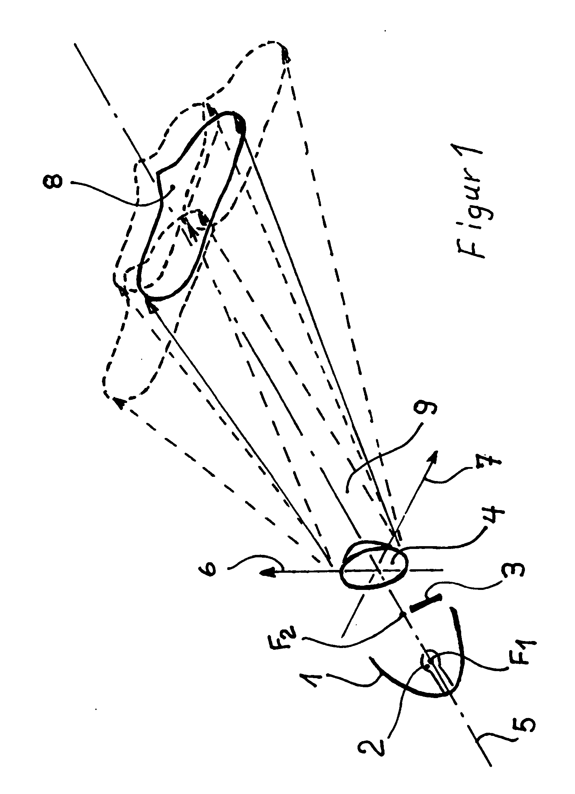

Figur 1 eine schematische Darstellung eines Scheinwerfers mit unterschiedlich eingestellten Lichtstromverteilungen und

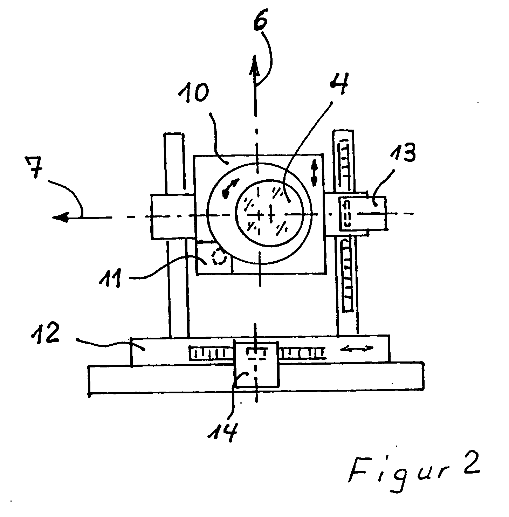

Figur 2 eine prinzipielle Darstellung einer ersten und zweiten Halterung mit exzentrisch eingesetzter Linse.

Ein Scheinwerfer besteht im wesentlichen aus einem Reflektor 1, einer Lichtquelle 2, einer Blende 3 und einer Linse 4. Die Lichtquelle 2 ist in der Nähe des ersten Brennpunktes F₁ des Reflektors 1 angeordnet. Die Blende 3 befindet sich nahe des zweiten Brennpunktes F₂ des Reflektors 1. Der dem Reflektor 1 zugewandte hintere Brennpunkt der Linse 4 liegt in der Nähe des zweiten Brennpunktes F₂ des Reflektors 1. Die Linse 4 ist in einer quer zur Scheinwerferlängsachse 5 angeordneten Ebene in vertikaler Richtung 6 und horizontaler Richtung 7 verschiebbar. In Verbindung mit einer nicht dargestellten Scheinwerferabdeckung ergibt sich eine asymmetrische Lichtstromverteilung des Lichtbündels bzw. Lichtstromes 9.

Bei einer Verstellung einer Standard-Linse 4 mit einer Brennweite von etwa 40 mm ergibt sich bei einer Verstellung von 1 mm eine Verstellung der Einstellwinkel um etwa 1 Grad. Die Linse 4 ist in einer Halterung 10 exzentrisch gelagert. Durch Rotation der Linse 4 in der ersten Halterung 10 ergibt sich eine Verstellung der Linse in vertikaler und horizontaler Richtung 6, 7. Bei einer Exzentrizität von beispielsweise 5 mm ergibt sich somit eine maximale Verschiebung der Linse in vertikaler Richtung 6 um 5 mm nach oben bzw. um 5 mm unten. Die maximale Auslenkung in horizontaler Richtung 7 ist entsprechend.

Über einen Stellmotor 11 kann die Linse 4 in der ersten Halterung 10 gedreht werden. Die erste Halterung 10 ist mit einer zweiten Halterung 12 in vertikaler Richtung verschiebbar verbunden. Über einen an der zweiten Halterung 12 angeordneten Stellmotor 13 kann die erste Halterung 10 in vertikaler Richtung 6 verschoben werden. Über einen weiteren Stellmotor 14 wird die zweite Halterung 12 in horizontaler Richtung 7 verschoben. Über eine in der Zeichnung nicht dargestellte Steuerung der Stellmotoren wird die Linse 4 in Abhängigkeit von der Lenkradstellung bzw. der Stellung Vorderräder des Fahrzeuges in horizontaler Richtung 7 verschoben. Durch die Steuerung der Stellmotoren wird die Linse 4 weiterhin in vertikaler Richtung 6 in Abhängigkeit von einer Neigung des Fahrzeuges in Richtung der Fahrzeuglängsachse gesteuert. Die Steuerung der Stellmotoren verstellt die Linse 4 weiterhin in vertikaler Richtung zwischen einer Abblendlicht-Position und einer Fernlicht-Position.

## Patentansprüche

1. Scheinwerfer, insbesondere für Fahrzeuge zur Projektion eines Lichtstromes (9), bestehend aus einem Reflektor (1), einer Lichtquelle (2), einer Blende (3) und einer nachgeschalteten Linse (4), wobei der Lichtstrom (9) in seiner vertikalen Einstellung bezüglich einer Scheinwerferlängsachse (5) durch vertikale Verschiebung der Linse (4) einstellbar ist, **dadurch gekennzeichnet, dass** der Lichtstrom (9) in seiner horizontalen Einstellung bezüglich einer Schweinwerferlängsachse (5) durch horizontale Verschiebung der Linse (4) einstellbar ist, und dass die Linse (4) exzentrisch zur Scheinwerferlängsachse (5) gelagert ist und im wesentlichen um die Scheinwerferlängsachse (5) drehbar angeordnet ist.

2. Scheinwerfer nach Anspruch 1, **dadurch gekennzeichnet, dass** die Einstellung in Abhängigkeit vom Ladezustand des Fahrzeuges durch vertikale Verschiebung der Linse (4) veränderbar ist.

3. Scheinwerfer nach Anspruch 1 oder 2, **dadurch gekennzeichnet, dass** die Einstellung in Abhängigkeit von der Lenkradstellung des Fahrzeuges durch horizontale Verschiebung der Linse (4) veränderbar ist.

4. Scheinwerfer nach einem der Ansprüche 1 bis 3, **dadurch gekennzeichnet, dass** die Linse (4) in vertikaler Richtung (6) zwischen einer Abblend- und einer Fernlicht-Position verschiebbar ist.

5. Scheinwerfer nach einem der Ansprüche 1 bis 4, **dadurch gekennzeichnet, dass** die Linse (4) über Stellmotoren (11, 13, 14) verschiebbar ist.

6. Scheinwerfer nach einem der Ansprüche 1 bis 6, **dadurch gekennzeichnet, dass** die Linse (4) in einer ersten Halterung (10) quer zur Scheinwerferlängsachse (5) in vertikaler und horizontaler Richtung verschiebbar angeordnet ist.

7. Scheinwerfer nach Anspruch 6, **dadurch gekennzeichnet, dass** die erste Halterung (10) mit einer zweiten Halterung (12) verbunden ist und quer zur Scheinwerferlängsachse (5) in vertikaler Richtung (6) verschiebbar angeordnet ist.

8. Scheinwerfer nach Anspruch 6 oder 7, **dadurch gekennzeichnet, dass** die erste Halterung (10) mit der zweiten Halterung (12) quer zur Scheinwerferlängsachse (5) in horizontaler Richtung (7) verschiebbar angeordnet ist.

9. Scheinwerfer nach Anspruch 7 oder 8, **dadurch gekennzeichnet, dass** die erste Halterung (10) gegenüber der zweiten Halterung (12) durch mindestens einen Stellmotor (13) verschiebbar ist.

10. Verfahren zur Einstellung eines Scheinwerfers für Fahrzeuge zur Projektion eines Lichtstromes, bestehend aus einem Reflektor, einer Lichtquelle, einer Blende und einer nachgeschalteten Linse, wobei nach Einbau des Scheinwerfers in ein Fahrzeug eine Einstellung von Einstellwinkeln der Lichtstromverteilung (8) durch Verschieben der Linse (4) in vertikaler Richtung (6, 7) vorgenommen wird, **dadurch gekennzeichnet, dass** nach Einbau des Scheinwerfers in ein Fahrzeug eine Einstellung von Einstellwinkein der Lichtstromverteüung (8) durch Verschieben der Linse (4) in horizontaler Richtung (6, 7) vorgenommen wird, und dass eine Einstellung von Einstellwinkeln der Lichtstromverteilung (8) zusätzlich durch Rotation der Linse (4) vorgenommen wird, wobei die exzentrisch zur Scheinwerferlängsachse (5) gelagerte Linse (4) im wesentlichen um die Scheinwerferlängsachse (5) verdreht wird.

11. Verfahren nach Anspruch 10, **dadurch gekennzeichnet, dass** die Einstellwinkel in horizontaler Richtung (7) entsprechend der Stellung der Vorderräder des Fahrzeuges durch einen Stellmotor (14), der die Linse (4) in horizontaler Richtung (7) verschiebt, nachgeführt werden.

12. Verfahren nach Anspruch 10 oder 11, **dadurch gekennzeichnet, dass** die Einstellwinkel in vertikaler Richtung (6) entsprechend einer Neigung des Fahrzeuges quer zu seiner Fahrzeuglängsachse durch einen Stellmotor, der die Linse (4) in vertikaler Richtung verschiebt, nachgeführt werden.

13. Verfahren nach einem oder mehreren der Ansprüche 10 bis 12, **dadurch gekennzeichnet, dass** zur Umschaltung zwischen Fernlicht und Abblendlicht die Linse (4) in vertikaler Richtung (6) durch einen Stellmotor (13) verschoben wird.

14. Verfahren nach einem oder mehreren der Ansprüche 10 bis 13, **dadurch gekennzeichnet, dass** die Bewegung der Linse (4) nach einem vorgegebenen Programmablauf gesteuert wird.

## Claims

1. Headlight, particularly for vehicles, for projecting a beam of light (9), comprising a reflector (1), a light source (2), a shield (3) and a lens (4) lined up after it, whereby the beam (9) can, in its vertical setting, be adjusted through vertical displacement of the lens (4), **characterized in that** the light beam (9) can, in its horizontal setting in relation to the longitudinal axis (5) of the headlight, be adjusted through horizontal displacement of the lens (4), and **in that** the lens (4) is supported eccentrically in relation to the longitudinal axis (5) of the headlight and is essentially disposed such that it can rotate about the longitudinal axis (5) of the headlight.

2. Headlight in accordance with claim 1, **characterized in that** the setting can be varied, through vertical movement of the lens (4), on the basis of the level of loading of the vehicle.

3. Headlight in accordance with claims 1 or 2, **characterized in that** the setting can be varied through horizontal displacement of the lens (4) occurring on the basis of the setting of the vehicle's steering wheel.

4. Headlight in accordance with one of claims 1 to 3, **characterized in that** the lens (4) can be displaced in a vertical direction (6) between a dipped and a full-beam position.

5. Headlight in accordance with one of claims 1 to 4, **characterized in that** the lens (4) can be displaced by means of adjustment motors (11, 13, 14).

6. Headlight in accordance with one of claims 1 to 6, **characterized in that** the lens (4) is disposed in a first mounting means (10) running transversely in relation to the longitudinal axis (5) of the headlight, such that it can be shifted in a horizontal and a vertical direction.

7. Headlight in accordance with claim 6, **characterized in that** the first mounting means (10) is connected to a second mounting means (12) and is disposed such that it can be displaced vertically and transversely in relation to the longitudinal axis (5) of the headlight.

8. Headlight in accordance with claims 6 or 7, **characterized in that** the first mounting means (10), together with the second mounting means (12), is disposed such that it can be displaced transversely in relation to the longitudinal axis (5) of the headlight, in a horizontal direction.

9. Headlight in accordance with claims 7 or 8, **characterized in that** the first mounting means (10) can be shifted in relation to the second mounting means (12) by means of at least one adjustment motor (13).

10. Process for setting a headlight, for vehicles for projecting a light beam, comprising a reflector, a light source, a shield and a lens lined up after it, whereby there is an adjustment of angles of distribution (8) of the light beam by means of displacement of the lens (4) in a vertical direction (6, 7), after the headlight has been installed in a vehicle, **characterized in that** an adjustment of light distribution (8) angles is carried out by means of displacement of the lens (4) in a horizontal direction (6, 7), after the headlight is built into the vehicle, **in that** a setting of angles of the light distribution (8) is additionally carried out by means of rotation of the lens (4), whereby the lens (4), which is eccentrically supported in relation to the longitudinal axis (5) of the headlight, is essentially rotated about the lengthwise axis (5) of the headlight.

11. Process in accordance with claim 10, **characterized in that** the setting angles are readjusted in a horizontal direction (7), in accordance with the position of the front wheels of the vehicle, by means of an adjustment motor (14) that shifts the lens (4) in a horizontal direction.

12. Process in accordance with claims 10 or 11, **characterized in that** the setting angles are readjusted in a vertical direction, according to the inclination of the vehicle, transversely in relation to its longitudinal axis, by means of an adjustment motor that displaces the lens (4) in a vertical direction.

13. Process in accordance with one or more of claims 10 to 12, **characterized in that** the lens (4) is pushed in a vertical direction (6) by means of an adjustment motor (13) in order to change over between full-distance illumination and dipped light.

14. Process in accordance with one or more of claims 10 to 13, **characterized in that** the movement of the lens (4) is controlled in accordance with a set programmed course.

## Revendications

1. Projecteur, en particulier pour véhicules, destiné à projeter un flux de lumière (9), formé par un réflecteur (1), une source lumineuse (2), un écran (3) et une lentille (4), le flux de lumière (9) pouvant être réglé dans sa position verticale par rapport à un axe longitudinal du projecteur (5) au moyen d'un déplacement vertical de la lentille (4), **caractérisé en ce que** le flux de lumière (9) est réglable dans sa position horizontale par rapport à un axe longitudinal du projecteur (5) au moyen d'un déplacement horizontal de la lentille (4), et **en ce que** la lentille (4) est montée de manière excentrée par rapport à l'axe longitudinal du projecteur (5) et est agencée de manière rotative sensiblement autour de l'axe longitudinal du projecteur (5).

2. Projecteur selon la revendication 1, **caractérisé en ce que** le réglage peut être modifié en fonction de l'état de charge du véhicule par un déplacement vertical de la lentille (4).

3. Projecteur selon la revendication 1 ou 2, **caractérisé en ce que** le réglage peut être modifié en fonction de la position du volant de direction du véhicule par un déplacement horizontal de la lentille (4).

4. Projecteur selon l'une quelconque des revendications 1 à 3, **caractérisé en ce que** la lentille (4) peut être déplacée dans la direction verticale (6) entre une position de feu de croisement et une position de feu de route.

5. Projecteur selon l'une quelconque des revendications 1 à 4, **caractérisé en ce que** la lentille (4) peut être déplacée au moyen de servomoteurs (11, 13, 14).

6. Projecteur selon l'une quelconque des revendications 1 à 5, **caractérisé en ce que** la lentille (4) est montée dans un premier support (10) de manière à pouvoir se déplacer perpendiculairement à l'axe longitudinal du projecteur (5) dans la direction verticale et horizontale.

7. Projecteur selon la revendication 6, **caractérisé en ce que** le premier support (10) est assemblé à un deuxième support (12) et peut être déplacé dans la direction verticale (6) perpendiculairement à l'axe longitudinal du projecteur (5) .

8. Projecteur selon la revendication 6 ou 7, **caractérisé en ce que** le premier support (10) est agencé de manière mobile avec le deuxième support (12) perpendiculairement à l'axe longitudinal du projecteur (5) dans la direction horizontale (7).

9. Projecteur selon la revendication 7 ou 8, **caractérisé en ce que** le premier support (10) peut être déplacé par rapport au deuxième support (12) par l'intermédiaire d'au moins un servomoteur (13).

10. Procédé de réglage d'un projecteur pour véhicules, destiné à projeter un flux de lumière, formé par un réflecteur, une source lumineuse, un écran et une lentille montée en aval, une mise au point des angles de réglage de la répartition du flux de lumière (8) étant effectuée, après le montage du projecteur dans un véhicule, par un déplacement de la lentille (4) dans la direction verticale (6, 7), **caractérisé en ce que**, après le montage du projecteur dans un véhicule, une mise au point des angles de réglage de la répartition du flux de lumière (8) est effectuée par un déplacement de la lentille (4) dans la direction horizontale (6, 7), et **en ce qu'**une mise au point des angles de réglage de la répartition du flux de lumière (8) est effectuée en plus par la rotation de la lentille (4), la lentille (4), excentrée par rapport à l'axe longitudinal du projecteur (5), tournant sensiblement autour de l'axe longitudinal du projecteur (5).

11. Procédé selon la revendication 10, **caractérisé en ce que** les angles de réglage peuvent être corrigés dans la direction horizontale (7) en fonction de la position des roues avant du véhicule au moyen d'un servomoteur (14), qui déplace la lentille (4) dans la direction horizontale (7).

12. Procédé selon la revendication 10 ou 11, **caractérisé en ce que** les angles de réglage peuvent être corrigés dans la direction verticale (6) en fonction de l'inclinaison du véhicule perpendiculairement à son axe longitudinal au moyen d'un servomoteur, qui déplace la lentille (4) dans la direction verticale.

13. Procédé selon l'une quelconque des revendications 10 à 12, **caractérisé en ce que** pour permuter entre les feux de croisement et les feux de route, la lentille (4) est déplacée dans la direction verticale (6) par un servomoteur (13).

14. Procédé selon l'une quelconque des revendications 10 à 13, **caractérisé en ce que** le mouvement de la lentille (4) est commandé selon un programme se déroulant de manière prédéfinie.
